# EUROPÄISCHE PATENTSCHRIFT

(11) **EP 3 469 228 B1**
(45) Veröffentlichungstag und Bekanntmachung des Hinweises auf die Patenterteilung: **19.03.2025**
(21) Anmeldenummer: 17713655.3
(22) Anmeldetag: 27.03.2017
(51) Int. Cl.: F16F 13/26

(54) **INVERTIERTES AKTIVES HYDROLAGER**
INVERTED ACTIVE HYDRAULIC BEARING
PALIER HYDRAULIQUE ACTIF INVERSÉ

(30) Priorität: 13.06.2016 DE 102016210402
(43) Veröffentlichungstag der Anmeldung: 17.04.2019
(73) Patentinhaber: ContiTech Vibration Control GmbH, 30175 Hannover (DE)
(72) Erfinder: GENDERJAHN, Robert, 30625 Hannover (DE); MARIENFELD, Peter, 31608 Marklohe (DE)
(74) Vertreter: Continental Corporation
(86) Internationale Anmeldenummer: PCT/EP2017/057166
(87) Internationale Veröffentlichungsnummer: WO 2017/215799

(56) Entgegenhaltungen:
- EP-A1- 0 561 703
- DE-A1- 10 019 872
- DE-A1- 102007 014 242
- JP-A- 2007 231 973

## Beschreibung

Die vorliegende Erfindung betrifft ein aktives Hydrolager, insbesondere ein invertiertes aktives Hydrolager, gemäß dem Oberbegriff des Anspruchs 1, einen Motor mit einem derartigen Hydrolager gemäß dem Anspruch 9 sowie ein Kraftfahrzeug mit einem derartigen Motor gemäß dem Anspruch 10.

Zur Isolation von Schwingungen sind verschiedene Arten und Ausführungen von Lagern bekannt. Zu diesen gehören die sog. Hydrolager oder auch Hydrauliklager. Sie dienen zur elastischen Abstützung von Aggregaten, insbesondere von Kraftfahrzeugmotoren. Mit Hilfe derartiger z. B. zwischen einem Motor und einem Chassis eines Kraftfahrzeugs angeordneter Hydrolager soll verhindert werden, dass sich Motor-Vibrationen auf das Fahrzeuggestell übertragen. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen soll, um entstehende Schwingungen über einen möglichst breiten Frequenzbereich möglichst wirkungsvoll zu isolieren.

Bei einem Hydrolager kann eine Flüssigkeit wie z.B. eine Hydraulikflüssigkeit zwischen einer Arbeitskammer und einer Ausgleichkammer über einen Drosselkanal hin und her bewegt werden. Eine Drosseleinheit trennt das Flüssigkeitsvolumen zwischen der Arbeitskammer und der Ausgleichskammer und bildet den Drosselkanal aus, der die Arbeitskammer und die Ausgleichskammer verbindet. Da der Drosselkanal einen Strömungswiderstand darstellt, können Schwingungen, welche über eine Tragfeder wie üblicherweise ein Elastomerelement auf die Arbeitskammer wirken, durch die Flüssigkeitsbewegungen durch den Drosselkanal hindurch gedämpft werden. Hierbei werden Schwingungen bis üblicherweise ca. 5 Hz durch die relativ große Steifigkeit der Tragfeder aufgenommen. Niederfrequente Schwingungen zwischen üblicherweise 5 Hz bis 20 Hz werden durch das Zusammenwirken der beiden Hydraulikkammern über den Drosselkanal gedämpft.

Es lassen sich verschiedene Arten von Hydrolagern unterscheiden:
Sog. konventionelle Hydrolager weisen den zuvor beschriebenen Aufbau und die hiermit verbundene Wirkungsweise auf, indem üblicherweise die Innenseite der elastischen Tragfeder und die eine Seite der Drosseleinheit die Arbeitskammer und eine elastische Rollmembran und die gegenüberliegende Seite der Drosseleinheit die Ausgleichkammer bilden. Die elastische Rollmembran führt zu einem variablen Volumen der Ausgleichskammer, so dass es hierdurch der üblicherweise inkompressiblen Flüssigkeit ermöglicht wird, aus der Arbeitskammer entweichen zu können. Alternativ oder zusätzlich kann auch eine elastische Entkopplungsmembran vorhanden sein, die einen elastischen Druckausgleich zwischen den beiden Hydraulikkammern ermöglichen kann. Bewegliche Teile sind außer der Elastizität der Tragfeder, der Rollmembran und bzw. oder der Entkopplungsmembran bei konventionellen Hydrolager üblicherweise nicht vorhanden.

Sog. schaltbare Hydrolager weisen grundsätzlich den gleichen Aufbau und die gleiche Wirkungsweise wie konventionelle Hydrolager auf. Zusätzlich zum Drosselkanal ist bei schaltbaren Hydrolagern jedoch ein Bypasskanal vorhanden, dessen Durchfluss schaltbar geöffnet und geschlossen werden kann. Alternativ kann auch ein Kanal zur Entlüftung einer Luftkammer unterhalb der Entkopplungsmembran schaltbar geöffnet und geschlossen werden. In beiden Fällen können durch das Öffnen bzw. Verschließen des jeweiligen Kanals zwei unterschiedliche Kennlinienverläufe der Steifigkeits- und Dämpfungscharakteristika des Lagers gewählt werden, so dass das Lager zwischen "weich" und "hart" geschaltet werden kann. Mit anderen Worten kann auf diese Art und Weise in bestimmten Situationen eine andere Steifigkeit des schaltbaren Hydrolagers eingestellt werden als im übrigen Betrieb. Diese Schaltfunktion kann durch einen elektromagnetischen Aktor ausgeführt werden.

Sog. steuerbare oder auch aktive Hydrolager entsprechen ebenfalls grundsätzlich dem Aufbau und der Wirkungsweise von konventionellen Hydrolagern, weisen jedoch eine steuerbare Möglichkeit auf, das Volumen der Arbeitskammer stufenlos zu verändern. Auf diese Weise kann aktiv auf das Isolationsverhalten des Hydrolagers eingewirkt werden. Die Steuerbarkeit wird üblicherweise über einen linear wirkenden elektromagnetischen Aktor erreicht, welcher eine Steuermembran z.B. über einen Kolben gegenüber der Arbeitskammer bewegen kann. Die Steuermembran bildet dabei einen Teil der Wandung der Arbeitskammer, so dass sich über die Bewegung der Steuermembran das Hydraulikvolumen der Arbeitskammer verändern lässt. Durch eine Ansteuerung des Aktors und des entsprechenden Einwirkens auf die Steuermembran kann eine Absenkung der dynamischen Federrate des Hydrolagers im Bereich der hochfrequenten Schwingungen bewirkt werden.

Bei den steuerbaren bzw. aktiven Hydrolagern lässt sich zwischen konventionellen steuerbaren Hydrolagern und invertierten steuerbaren Hydrolagern unterscheiden. Bei den konventionellen steuerbaren Hydrolagern drückt das Fluid direkt von der Seite der Arbeitskammer auf die Membran, die der Arbeitskammer zugewandt ist, d.h. üblicherweise von oben von der Seite der Tragfeder her. Bei invertierten steuerbaren Hydrolagern drückt die Membran von der Seite der Ausgleichskammer bzw. von der Seite des Drosselkanals auf die Membran, d.h. üblicherweise von unten von der Seite des Aktors her. In diesem Fall befindet sich üblicherweise ein konstruktionsbedingt geschlossenes Luftvolumen hinter der Membran, welches vollkommen von der Umgebung abgetrennt ist.

Alle zuvor beschriebenen Arten von Hydrolagern können als Motorlager eingesetzt werden.

Die steuerbaren bzw. aktiven Hydrolager haben gemeinsam, dass sich der Aktor immer außerhalb der Flüssigkeitskammern, d.h. außerhalb der Arbeitskammer und außerhalb der Ausgleichskammer, befindet. Üblicherweise ist der Aktor unterhalb des Hydrolagers, d.h. unterhalb der Ausgleichskammer, angeordnet.

Nachteilig ist hierbei, dass zusätzlicher vertikaler Bauraum für die Anordnung des Aktors und dessen Anbindung benötigt wird. Dieser benötigte vertikale Bauraum ist gerade bei einem invertierten aktiven Hydrolager prinzipbedingt besonders groß, da Bauraum für die Umströmgeometrie, für die Luftkammer und für eine Dichtung notwendig ist.

Nachteilig ist ferner, dass der Aktorstößel die Kammer aufgrund der Invertierung der Anbindung der Steuermembran durchdringt. Es muss daher eine Abdichtung zwischen Aktorstößel und Arbeitskammer hergestellt werden. Diese Dichtstelle muss dem hohen Druck in der Arbeitskammer standhalten und entsprechend dimensioniert werden. Da sich die Abdichtung zwischen Aktor und Steuermembran befinden muss, ist ein entsprechend großer Abstand zwischen beiden Komponenten erforderlich, welcher direkt den benötigten Bauraum in vertikaler Richtung beeinflusst.

Nachteilig ist weiterhin, dass es bei unzureichender Dimensionierung oder Alterung bzw. Ermüdung der Dichtstelle zwischen Aktor und Steuermembran zu Undichtigkeiten und damit zur Verschlechterung der Lagereigenschaften kommen kann.

Nachteilig ist des Weiteren die hohe zusätzliche Masse des separaten Aktorstößels und des Führungsbolzens. Denn neben den höheren Kosten und der aufwendigeren Montage führt das höhere Gewicht auch zu einer starken Beeinflussung der Resonanzfrequenz des an das Lager angekoppelten Aktors. Eine niedrige Eigenfrequenz führt in diesem Fall unmittelbar zu einem verschlechterten hochfrequenten Lagerverhalten.

Nachteilig ist auch, dass zusätzlicher Bauraum für die Ausbildung der Luftkammer im invertierten aktiven Motorlager erforderlich ist.

Die JP 2007 231973 A beschreibt eine Schwingungsdämpfungsvorrichtung mit einem magnetischen Bereich auf der Mittelseite einer zweiten Membran, die einen Teil einer Trennwand einer zweiten Teilflüssigkeitskammer bildet, und mit einem nichtmagnetischen elastischen Bereich auf einer äußeren Umfangsseite des magnetischen Bereichs. Der elastische Bereich wird elastisch verformt, um die zweite Membran in der Ausdehnungsrichtung der Ausdehnung der zweiten Teilflüssigkeitskammer verformbar zu machen. Wenn also ein Elektromagnet auf den magnetischen Bereich der zweiten Membran eine elektromagnetische Anziehungskraft ausübt, während Schüttelschwingungen eingeleitet werden, wird die Verformung der zweiten Membran entlang der Ausdehnungsrichtung eingeschränkt. Wenn der Elektromagnet während der Einleitung der Leerlaufschwingung die elektromagnetische Anziehungskraft auf die zweite Membran nicht mehr ausübt, ist die zweite Membran entlang der Ausdehnungsrichtung verformbar.

Die EP 0 561 703 A1 beschreibt eine hydraulische Antischwingungsstütze mit einem starren Rahmen, mit einem Kopf, mit einer kegelstumpfförmigen Elastomerwand, die den Zylinder mit dem Kopf verbindet, mit einer vom Zylinder getragene Membran, mit einer Trennwand, die das Innere des so entstandenen flüssigkeitsgefüllten Gehäuses in eine Arbeitskammer und eine Ausgleichskammer trennt, mit einem gedrosselten Durchgang, der die beiden Kammern miteinander verbindet, mit einem Kolben mit kleiner Verdrängung und mit einem elektrischen Erreger, der geeignet ist, Gegenschwingungen im Kolben zu erzeugen. Eine luftgefüllte Kapsel, die durch den Kolben und durch eine starre Wand begrenzt wird, die durch einen geschlitzten Abstandshalter am Rahmen befestigt ist, ist in die Arbeitskammer eingetaucht, wobei der Kolben zwischen der Wand und dem Erreger angeordnet ist und der Umfang des Kolbens durch eine abgedichtete und verformbare Ringdichtung mit der Wand verbunden ist.

Die DE 100 19 872 A1 beschreibt einen flexiblen Körper, welcher erste und zweite Befestigungselemente verbindet, die teilweise eine mit einem nicht kompressiblen Fluid gefüllte Fluidkammer definieren. Ein schwingendes Element definiert teilweise die Fluidkammer. Ein elektromagnetisches Betätigungselement versetzt das Vibrationselement in Schwingungen, um einen Druck für das nicht komprimierbare Fluid zu steuern. Ein Stabilisierungselement, das an einer der gegenüberliegenden Seiten des Schwingungselements angebracht ist, ist von diesem Element abgesetzt.

Das DE 10 2007 014 242 B4 beschreibt eine Motorlagerung, die hydraulisch aktiv gedämpft ist. Eine Arbeitskammer ist von einer elastischen Umfangswand und einer Ausgleichskammer umgeben. Eine Kompensationsplatte ist als flexible Stützmembran ausgebildet. Ein üblicher piezoelektrischer Flachaktor ist mit der flexiblen Stützmembran in einer stofflichen Verbindung zu einer aktiven flexiblen Kompensationsmembran in Form einer Verbindungsflächenausbildung kombiniert.

Eine Aufgabe der vorliegenden Erfindung ist es, ein aktives Hydrolager, insbesondere ein invertiertes aktives Hydrolager, der eingangs beschriebenen Art mit einem reduzierten vertikalen Bauraum bereitzustellen. Zusätzlich oder alternativ soll die Gefahr von Undichtigkeiten bei einem aktiven Hydrolager, insbesondere bei einem invertierten aktiven Hydrolager, der eingangs beschriebenen Art reduziert werden. Zusätzlich oder alternativ soll das Gewicht, insbesondere das Gewicht der beweglichen Bauelemente, bei einem aktiven Hydrolager, insbesondere bei einem invertierten aktiven Hydrolager, der eingangs beschriebenen Art reduziert werden.

Die Aufgabe wird erfindungsgemäß durch ein aktives Hydrolager, insbesondere durch ein invertiertes aktives Hydrolager, mit den Merkmalen gemäß Anspruch 1, durch einen Motor mit den Merkmalen nach Anspruch 9 sowie durch ein Kraftfahrzeug mit den Merkmalen nach Anspruch 10 gelöst. Vorteilhafte Weiterbildungen sind in den Unteransprüchen beschrieben.

Somit betrifft die vorliegende Erfindung ein aktives Hydrolager, insbesondere ein invertiertes aktives Hydrolager. Das Hydrolager weist eine erste Fluidkammer, eine zweite Fluidkammer und einen Drosselkanal auf, welcher die erste Fluidkammer und die zweite Fluidkammer fluidströmend verbinden kann. Als Fluid kann vorzugsweise eine inkompressible Hydraulikflüssigkeit verwendet werden, wie bei Hydrolagern üblich.

Das aktive Hydrolager weist ferner ein Umströmungsvolumen, welches ausgebildet ist, fluidströmend mit der ersten Fluidkammer verbunden zu werden, und einen Aktor mit einer Steuermembran auf, wobei der Aktor ausgebildet ist, die Steuermembran gegenüber dem Umströmungsvolumen, insbesondere translatorisch, bewegen zu können. Über die Bewegung der Steuermembran auf das Fluid, welches sich im Umströmungsvolumen befindet, kann gemäß der Funktion eines aktiven Hydrolagers aktiv auf das Fluid in der ersten Fluidkammer eingewirkt werden.

Der Aktor ist zwischen der ersten Fluidkammer und der zweiten Fluidkammer angeordnet. Mit anderen Worten kann erfindungsgemäß der Aktor innerhalb der Fluidkammern angeordnet werden. Auf diese Weise kann das aktive Hydrolager kompakter, d.h. mit weniger Bauraum, ausgeführt werden. Insbesondere kann in der vertikalen Richtung eine deutliche Reduzierung des Bauraums eines (invertierten) aktiven Hydrolagers erfolgen.

Erfindungsgemäß ist der Aktor zwischen der ersten Fluidkammer und dem Umströmungsvolumen angeordnet. Auf diese Weise kann eine besonders kompakte Anordnung, insbesondere in vertikaler Richtung, der einzelnen Elemente bzw. Fluidkammern eines invertierten aktiven Hydrolagers erfolgen. Insbesondere kann auf diese Weise ermöglicht werden, dass der Aktor und die Steuermembran in der vertikalen Richtung nach unten zum Umströmungsvolumen hin und damit von der ersten Fluidkammer weg wirken können, wie es der Funktionsweise eines invertierten aktiven Hydrolagers entspricht.

Gemäß einem weiteren Aspekt der vorliegenden Erfindung ist bzw. sind die erste Fluidkammer und bzw. oder die zweite Fluidkammer im Wesentlichen parallel zum Umströmungsvolumen angeordnet. Mit anderen Worten erstrecken sich die erste Fluidkammer und bzw. oder die zweite Fluidkammer sowie das Umströmungsvolumen im Wesentlichen in einer horizontalen Ebene, welches senkrecht zur vertikalen Richtung des aktiven Hydrolagers verläuft. Hierdurch kann eine kompakte Bauweise in der vertikalen Richtung begünstigt werden.

Gemäß einem weiteren Aspekt der vorliegenden Erfindung weist das aktive Hydrolager ferner einen Umströmungskanal auf, welcher ausgebildet ist, das Umströmungsvolumen und die erste Fluidkammer fluidströmend miteinander zu verbinden. Auf diese Weise kann eine definierte fluidführende Verbindung zwischen dem Umströmungsvolumen und der ersten Fluidkammer geschaffen werden. Die Gestaltung des Umströmungskanals kann ebenfalls dazu verwendet werden, dass Dämpfungsverhalten des aktiven Hydrolagers gezielt zu beeinflussen. Ferner kann der Umströmungskanal ausgestaltet werden, auch bei der erfindungsgemäßen Anordnung des Aktors gegenüber den Fluidkammern eine definierte fluidführende Verbindung zwischen dem Umströmungsvolumen und der ersten Fluidkammer herzustellen.

Gemäß einem weiteren Aspekt der vorliegenden Erfindung sind der Drosselkanal und der Umströmungskanal im Wesentlichen parallel zueinander angeordnet. Auf diese Weise kann sowohl für rechteckige als auch für zylinderförmige Ausgestaltungen eines erfindungsgemäßen aktiven Hydrolagers eine jeweilige fluidführende Verbindung des Drosselkanals zwischen der ersten und der zweiten Fluidkammer auf der einen Seite des aktiven Hydrolagers und des Umströmungskanals zwischen der ersten Fluidkammer und dem Umströmungsvolumen umgesetzt werden. Dies kann durch eine klare räumliche Trennung von Drosselkanal und Umströmungskanal auch einfach erfolgen. Auch können vorzugsweise jeweils unterschiedliche Ausgestaltungen des Drosselkanals und des Umströmungskanals unabhängig voneinander eingesetzt und miteinander kombiniert werden, so dass ein modularer Aufbau des aktiven Hydrolagers möglich ist.

Gemäß einem weiteren Aspekt der vorliegenden Erfindung ist bzw. sind der Drosselkanal und bzw. oder der Umströmungskanal im Wesentlichen mäanderförmig ausgebildet. Auf diese Weise kann eine kompakte Ausbildung des Drosselkanals und bzw. oder des Umströmungskanals erfolgen, wobei gleichzeitig eine gewisse Länge des jeweiligen Kanals umgesetzt werden kann, welche sich auf den Strömungswiderstand des Kanals auswirken kann. Hierdurch können weitere Möglichkeiten neben z.B. dem Querschnitt eines Kanals geschaffen werden, das Strömungsverhalten des Fluids durch den jeweiligen Kanal hindurch gezielt zu beeinflussen.

Gemäß einem weiteren Aspekt der vorliegenden Erfindung ist bzw. sind der Drosselkanal und bzw. oder der Umströmungskanal im Wesentlichen senkrecht zur ersten Fluidkammer und bzw. oder zur zweiten Fluidkammer und bzw. oder zum Umströmungsvolumen angeordnet. Dies kann einen kompakten Aufbau in der horizontalen Ebene senkrecht zur vertikalen Richtung des aktiven Hydrolagers begünstigen, welcher insbesondere bei gleichzeitig kompaktem Aufbau in der vertikalen Richtung selbst vorteilhaft sein kann, um insgesamt ein kompaktes aktives Hydrolager zu schaffen.

Gemäß einem weiteren Aspekt der vorliegenden Erfindung grenzt die Steuermembran mit einer Seite an das Umströmungsvolumen und mit der gegenüberliegenden Seite an eine Luftkammer an. Hierdurch kann auf eine zusätzliche Luftkammer sowie auf eine Entlüftungsbohrung verzichtet werden, weil die Luftkammer mit dem Aktor bzw. als Bestandteil des Aktors zwischen der ersten Fluidkammer und der zweiten Fluidkammer angeordnet werden kann.

Gemäß einem weiteren Aspekt der vorliegenden Erfindung ist die Luftkammer zumindest im Wesentlichen, vorzugsweise vollständig, innerhalb des Einbauraums des Aktors, vorzugsweise zwischen dem Drosselkanal, dem Umströmungskanal, der ersten Fluidkammer und dem Umströmungsvolumen, angeordnet. Hierdurch kann die Luftkammer platzsparend um den Aktor herum bzw. als Bestandteil des Aktors bzw. durch den Einbauraum des aktiven Hydrolagers, welcher zur Aufnahme des Aktors vorgesehen ist, ausgebildet bzw. angeordnet werden, was einen kompakten Aufbau des aktiven Hydrolagers begünstigen kann.

Erfindungsgemäß weist die Steuermembran einen Schaft auf, welcher durch den Aktor translatorisch bewegt werden kann. Der Schaft kann gleichzeitig zur Führung der Aktorkomponenten genutzt werden, so dass ein zusätzlicher Führungsbolzen nicht mehr erforderlich ist. Somit kann gegenüber bekannten (invertierten) aktiven Hydrolagern ein Bauteil eingespart werden, was sowohl das Gewicht der beweglichen Komponenten des Aktors als auch das Volumen des Aktors reduzieren kann. Die Gewichtsreduzierung kann zu einer Erhöhung der Aktor-Lager-Resonanz und damit zu einer besseren aktiven Lagerperformance im hochfrequenten Bereich führen. Insgesamt kann der konstruktive Aufbau des Aktors bzw. die Umsetzung der (translatorischen) Beweglichkeit der Steuermembran vereinfacht werden.

Erfindungsgemäß weist die Steuermembran einen Flansch auf, welcher mit dem Schaft feststehend und mit dem Aktor elastisch verbunden ist. Hierdurch kann über den Schaft eine bewegliche Verbindung des Flansches gegenüber dem Aktor geschaffen werden, wobei die Bewegung elektromagnetisch zwischen den Spulen des Aktors und dem Schaft ermöglicht werden kann. Gleichzeitig kann eine fluiddichte Verbindung geschaffen werden, weil die Spulen des Aktors und der Schaft innerhalb des Flansches mit seiner elastischen Ankopplung an den feststehenden Komponenten des Aktors angeordnet werden können. Mit anderen Worten kann eine (translatorische) Bewegung der Steuermembran von hinten aus der Sicht des Umströmungsvolumens erfolgen. Auf diese Weise kann auf Dichtungen zwischen dem Aktorstößel und dem Umströmungsvolumen verzichtet werden, weil das Umströmungsvolumen erfindungsgemäße gar nicht von dem Aktorstößel durchdrungen werden muss, um die Bewegung des Aktors bzw. des Aktorstößels auf die Steuermembran zu übertragen. Hierdurch können Dichtigkeitsprobleme an dieser Stelle vermieden werden. Auch kann eine Dichtung eingespart werden. Dies kann auch die Ausgestaltung der Rollmembran vereinfachen.

Erfindungsgemäß ist die erste Fluidkammer eine Arbeitskammer und die zweite Fluidkammer eine Ausgleichkammer. Hierdurch kann die erfindungsgemäße Wirkung zwischen der Arbeitskammer und Ausgleichskammer des Hydrolagers ausgeübt werden.

Die vorliegende Erfindung betrifft auch einen Motor mit einem Hydrolager wie zuvor beschrieben.

Die vorliegende Erfindung betrifft auch ein Kraftfahrzeug mit einem Motor wie zuvor beschrieben.

Zwei Ausführungsbeispiele und weitere Vorteile der Erfindung werden nachstehend im Zusammenhang mit den folgenden Figuren erläutert. Darin zeigt:
- Fig. 1: eine schematische Schnittdarstellung eines invertierten aktiven Hydrolagers gemäß dem Stand der Technik;
- Fig. 2a: eine schematische Schnittdarstellung eines invertierten aktiven Hydrolagers gemäß eines ersten Ausführungsbeispiels der vorliegenden Erfindung;
- Fig. 2b: eine Detailansicht der Fig. 2a;
- Fig. 3a: eine Drosseleinheit zur Verwendung bei dem invertierten aktiven Hydrolager der Fig. 2a;
- Fig. 3b: eine schematische Schnittdarstellung der Drosseleinheit der Fig. 3a;
- Fig. 4: eine schematische Schnittdarstellung eines invertierten aktiven Hydrolagers gemäß eines zweiten Ausführungsbeispiels der vorliegenden Erfindung; und
- Fig. 5: eine Drosseleinheit zur Verwendung bei dem invertierten aktiven Hydrolager der Fig. 4.

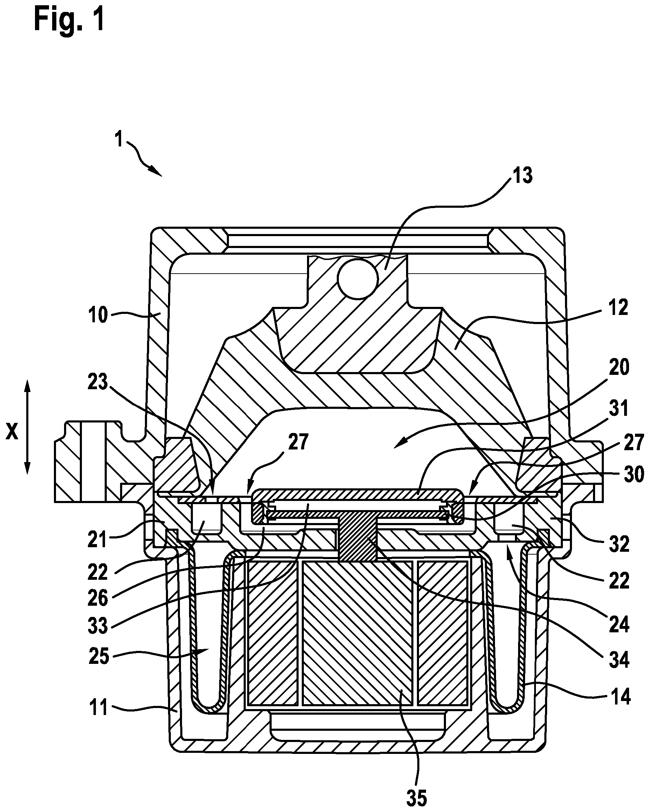

Fig. 1 zeigt eine schematische Schnittdarstellung eines invertierten aktiven Hydrolagers 1 gemäß dem Stand der Technik. Das Äußere des Hydrolagers 1 wird oben durch ein Lagergehäuse 10 und unten durch einen Lagerdeckel 11 gebildet. Im Lagergehäuse 10 ist ein elastomerer Tragkörper 12 in Form einer elastomeren Tragfeder 12 angeordnet, welche nach oben mit ihrem Zug-/Druckanschlag 13 aus dem Lagerdeckel 11 heraus ragt. An dem Zug-/Druckanschlag 13 kann z.B. ein Motor eines Kraftfahrzeugs montiert werden, dessen Schwingungen durch das Hydrolager 1 zu bedämpfen bzw. zu isolieren sind. Innerhalb des unteren Lagerdeckels 11 ist eine Rollmembran 14 angeordnet.

Etwa in der Höhe mittig ist innerhalb des Hydrolagers 1 eine Drosseleinheit 21 angeordnet. Durch die obere Seite der Drosseleinheit 21 und die Innenseite der elastomeren Tragfeder 12 wird eine erste Fluidkammer 20 als Arbeitskammer 20 des Hydrolagers 1 gebildet. Die untere Seite der Drosseleinheit 21 und die Innenseite der Rollmembran 14 bilden eine zweite Fluidkammer 25 als Ausgleichskammer 25 des Hydrolagers 1. Innerhalb der Drosseleinheit 21 ist ein Drosselkanal 22 ausgebildet, welcher im Wesentlichen horizontal und ringförmig verläuft. Der Drosselkanal 22 weist zur Arbeitskammer 20 hin einen Drosselkanaleingang 23 und zur Ausgleichskammer 25 hin einen Drosselkanalausgang 24 auf.

Der Drosselkanal 21 verbindet die Arbeitskammer 20 und die Ausgleichskammer 25 fluidströmend miteinander, so dass ein Fluid wie eine Hydraulikflüssigkeit zwischen Arbeitskammer 20 und Ausgleichskammer 25 über den Drosselkanal 22 ausgetauscht werden kann. Der Strömungswiderstand, den der Drosselkanal 22 für das Fluid darstellt, beeinflusst das Dämpfungs- und Isolationsverhalten des Hydrolagers 1.

Aufgrund seiner Funktionsweise als aktives Hydrolager 1 weist das Hydrolager 1 im Lagerdeckel 11 einen elektromagnetischen Linearaktor 35 auf, welcher innerhalb der Rollmembran 14 angeordnet ist, die ringförmig um den elektromagnetischen Linearaktor 35 herum verläuft. Der elektromagnetische Linearaktor 35 kann einen Aktorstößel 34 in der vertikalen Richtung X hoch und runter bewegen. Der Aktorstößel 34 ist an seinem oberen Ende kreisrund und tellerförmig ausgebildet. Die seitlichen Kanten des Aktorstößels 34 sind über eine Steuermembran 30 elastisch mit einer oberen Drosselscheibe 31 verbunden, so dass zwischen der Unterseite der oberen Drosselscheibe 31 und der oberen Seite des Aktorstößels 34 sowie der Steuermembran 30 eine Luftkammer 33 ausgebildet wird, die ein geschlossenes Luftvolumen aufweist. Zwischen der unteren Drosselscheibe 32 und der Steuermembran 30 ist ein Umströmungsvolumen 26 ausgebildet, welches über einen Eingang 27 mit der Arbeitskammer 20 fluidführend verbunden ist. Auf das Fluid innerhalb des Umströmungsvolumens 26 kann die Steuermembran 30 über die Bewegung des Linearaktors 35 in der vertikalen Richtung X (auf dieses Fluid) und damit auch auf das Fluid innerhalb der Arbeitskammer 20 wirken. Dies macht das vorliegende Hydrolager 1 zu einem invertierten aktiven Hydrolager 1.

Der Teil der Drosseleinheit 21, welcher den Drosselkanal 22 aufweist, kann als untere Drosselscheibe 32 bezeichnet werden, wobei der Drosselkanaleingang 23 durch die obere Drosselscheibe 31 hindurch ausgebildet ist. Der Drosselkanal 22 verläuft ring- bzw. spiralförmig um den Linearaktor 35 bzw. um die Steuermembran 30 herum.

Ein derartiges invertiertes aktives Hydrolager 1 weist in der vertikalen Richtung X eine vergleichsweise große Ausdehnung auf, so dass zumindest in der vertikalen Richtung X ein vergleichsweise großer Bauraum erforderlich ist, um ein derartiges invertiertes aktives Hydrolager 1 in einem Fahrzeug einzusetzen.

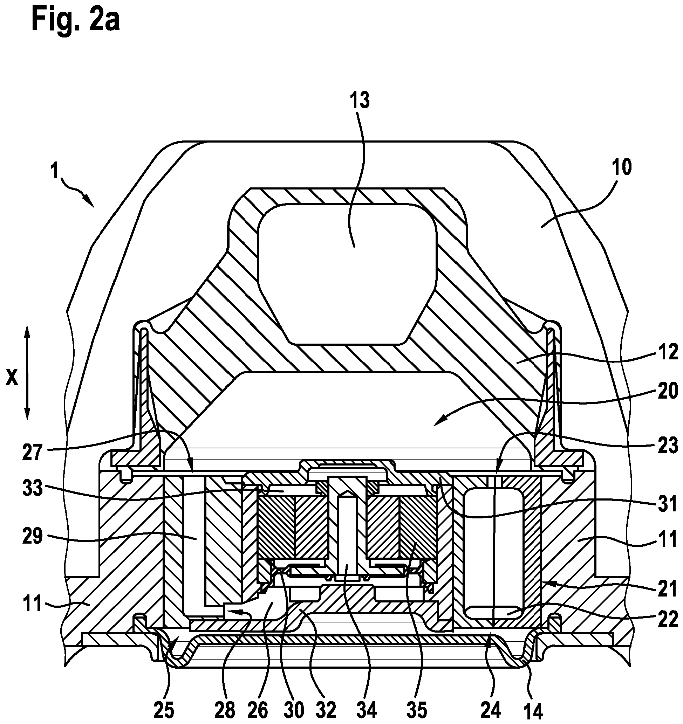

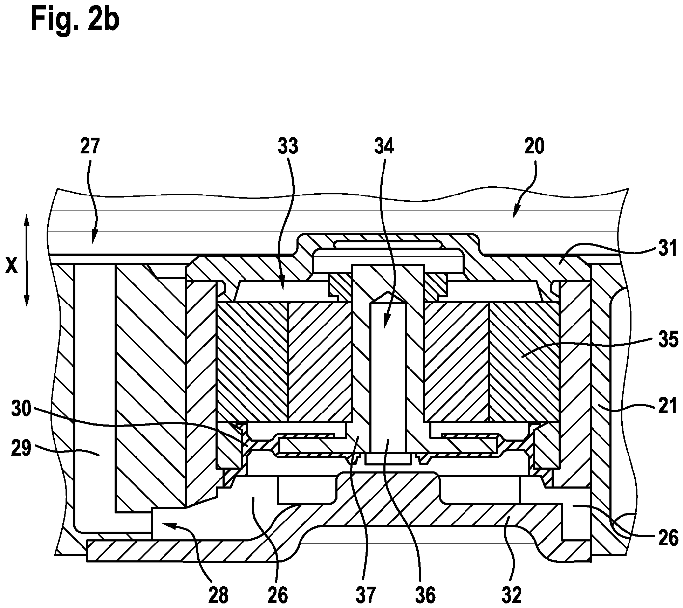

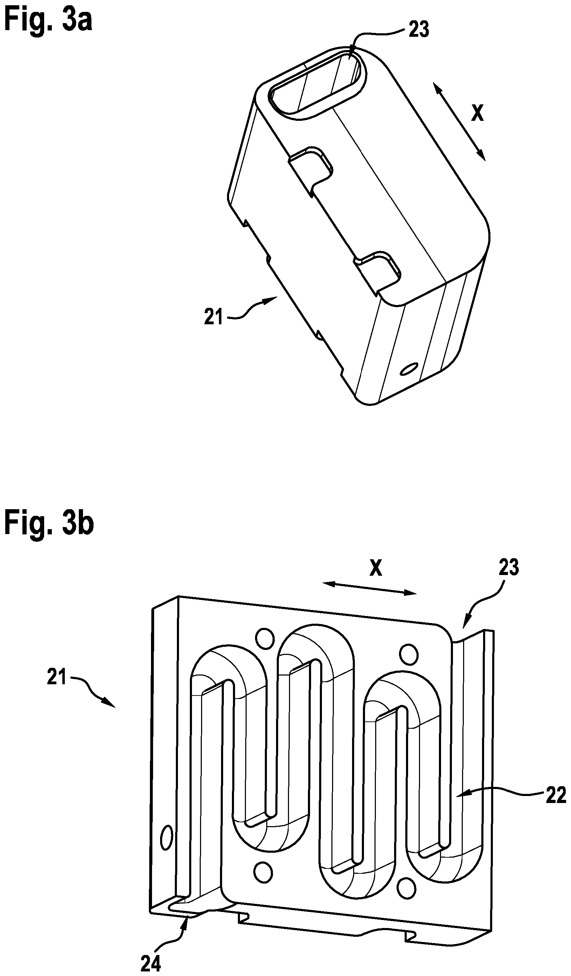

Fig. 2a zeigt eine schematische Schnittdarstellung eines invertierten aktiven Hydrolagers 1 gemäß eines ersten Ausführungsbeispiels der vorliegenden Erfindung. Fig. 2b zeigt eine Detailansicht der Fig. 2a. Fig. 3a zeigt eine Drosseleinheit 21 zur Verwendung bei dem invertierten aktiven Hydrolager 1 der Fig. 2a. Fig. 3b zeigt eine schematische Schnittdarstellung der Drosseleinheit der Fig. 3a.

Bei dem invertierten aktiven Hydrolager 1 gemäß des ersten Ausführungsbeispiels der vorliegenden Erfindung ist der Linearaktor 35 in der vertikalen Richtung X zwischen der Arbeitskammer 20 und der Ausgleichskammer 25 angeordnet. Auf diese Weise kann eine kompaktere Bauform als bisher bekannt geschaffen werden.

Hierzu ist das Umströmungsvolumen 26 unterhalb des Linearaktors 35 angeordnet, welches weiterhin im Wesentlichen durch die untere Drosselscheibe 32 und die Steuermembran 30 gebildet wird. Die fluidführende Verbindung zwischen dem Umströmungsvolumen 26 wird seitlich links an dem Linearaktor 35 vorbei durch einen im Wesentlichen vertikalen Umströmungskanal 29 gebildet, dessen Eingang 27 den Umströmungskanal 29 fluidführend mit der Arbeitskammer 20 und dessen Ausgang 28 den Umströmungskanal 29 fluidführend mit der Ausgleichskammer 25 verbindet. Hierdurch kann auch bei der erfindungsgemäßen Anordnung des Linearaktors 35 zwischen Arbeitskammer 20 und Umströmungsvolumen 26 eine fluidführende Verbindung zwischen diesen beiden Fluidkammern 20, 26 geschaffen werden.

Die Steuermembran 30 wird im Wesentlichen durch einen Flansch 37 gebildet, welcher mit einem Schaft 36 feststehend und mit dem Linearaktor 35 elastisch verbunden ist. Der Schaft 36 des Linearaktors 35 des invertierten aktiven Hydrolagers 1 gemäß des ersten Ausführungsbeispiels der vorliegenden Erfindung entspricht dem Aktorstößel 34 eines derartigen bekannten invertierten aktiven Hydrolagers 1, wobei der Schaft 36 bzw. die Steuermembran 30 einfacher aufgebaut ist. Hierdurch kann Aufwand und Bauraum eingespart werden. Ferner können Dichtungen des Aktorstößels 34 gegenüber dem Umströmungsvolumen 26 entfallen, weil der Schaft 36 des Linearaktors 35 des invertierten aktiven Hydrolagers 1 gemäß des ersten Ausführungsbeispiels der vorliegenden Erfindung hinter der Steuermembran 30 angeordnet ist und diese gar nicht durchdringt.

Das invertierte aktive Hydrolager 1 gemäß des ersten Ausführungsbeispiels der vorliegenden Erfindung ist rechteckig ausgeführt. Der Umströmungskanal 29 ist links des Linearaktors 35 neben diesem angeordnet. Da hierdurch jedoch ein durchgängiger ring- bzw. spiralförmiger Verlauf des Drosselkanals 22 um den Linearaktor 35 herum nicht mehr möglich ist, ist die Drosselkanaleinheit 21 rechts neben dem Linearaktor 35 angeordnet. Der Drosselkanaleingang 23 verbindet den Drosselkanal 22 in der vertikalen Richtung X nach oben mit der Arbeitskammer 20. Der Drosselkanalausgang 24 verbindet den Drosselkanal 22 in der vertikalen Richtung X nach unten mit der Ausgleichskammer 25. Der Drosselkanal 22 ist innerhalb der Drosselkanaleinheit 21 mäanderförmig angeordnet, vgl. Fig. 3a und 3b. Hierdurch kann die fluidführende Verbindung des Drosselkanals 22 auch bei der erfindungsgemäßen Anordnung des Linearaktors 35 umgesetzt werden.

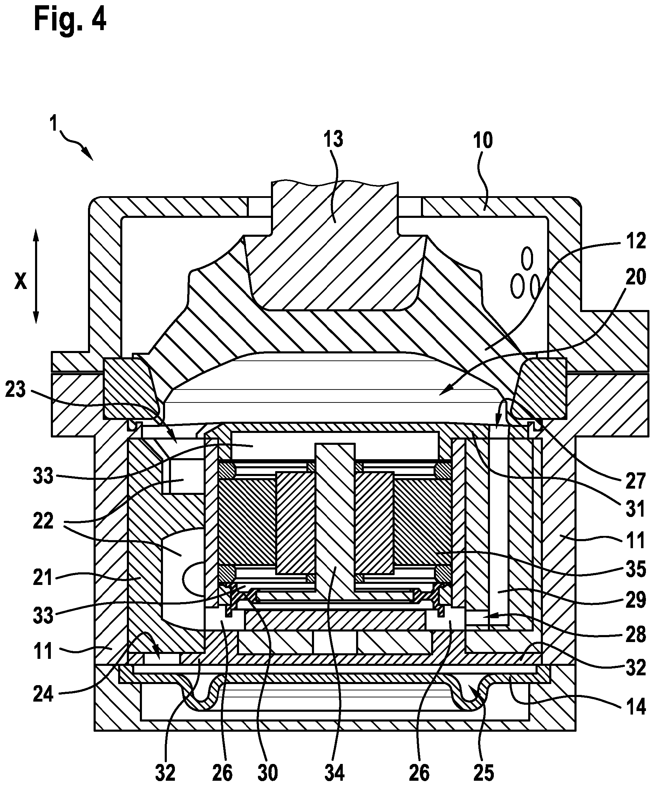

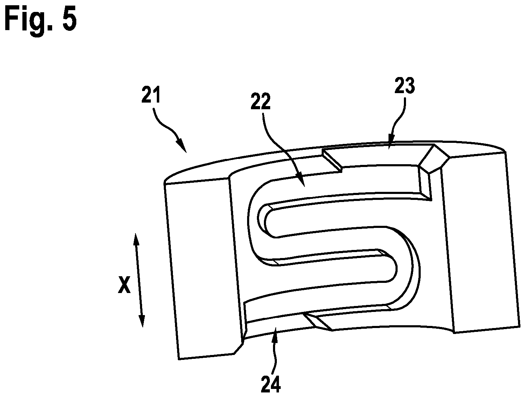

Fig. 4 zeigt eine schematische Schnittdarstellung eines invertierten aktiven Hydrolagers 1 gemäß eines zweiten Ausführungsbeispiels der vorliegenden Erfindung. Fig. 5 zeigt eine Drosseleinheit 21 zur Verwendung bei dem invertierten aktiven Hydrolager der Fig. 4.

Das invertierten aktiven Hydrolagers 1 gemäß eines zweiten Ausführungsbeispiels der vorliegenden Erfindung weist einen Linearaktor 35 auf, welcher zylinderförmig ausgebildet ist. Entsprechend ist die Drosseleinheit 21 halbschalenförmig ausgebildet, vgl. Fig. 5.

### Bezugszeichenliste (Teil der Beschreibung)

- X: vertikale Richtung

- 1: (invertiertes) aktives Hydrolager

- 10: Lagergehäuse
- 11: Lagerdeckel
- 12: elastomerer Tragkörper bzw. elastomere Tragfeder
- 13: Zug-/Druckanschlag des Tragkörpers 12
- 14: Rollmembran der Ausgleichskammer 25

- 20: erste Fluidkammer; Arbeitskammer
- 21: Drosseleinheit
- 22: Drosselkanal
- 23: Drosselkanaleingang
- 24: Drosselkanalausgang
- 25: zweite Fluidkammer; Ausgleichskammer
- 26: Umströmungsvolumen; Umströmungsgeometrie
- 27: Eingang des Umströmungskanals 29 bzw. des Umströmungsvolumens 26
- 28: Ausgang des Umströmungskanals 29
- 29: Umströmungskanal

- 30: Steuermembran
- 31: obere Drosselscheibe
- 32: untere Drosselscheibe
- 33: Luftkammer
- 34: Aktorstößel; Führungsbolzen des Aktors 35
- 35: Aktor; (elektromagnetischer) Linearaktor
- 36: Schaft des Aktorstößels 34
- 37: Flansch des Aktorstößels 34

## Patentansprüche

1. Aktives Hydrolager (1), insbesondere invertiertes aktives Hydrolager (1), mit
einer ersten Fluidkammer (20),
einer zweiten Fluidkammer (25),
einem Drosselkanal (22), welcher ausgebildet ist, die erste Fluidkammer (20) und die zweite Fluidkammer (25) fluidströmend miteinander zu verbinden,
einem Umströmungsvolumen (26), welches ausgebildet ist, fluidströmend mit der ersten Fluidkammer (20) verbunden zu werden, und
einem Aktor (35) mit einer Steuermembran (30),
wobei der Aktor (35) ausgebildet ist, die Steuermembran (30) gegenüber dem Umströmungsvolumen (26), insbesondere translatorisch, bewegen zu können, die erste Fluidkammer (20) eine Arbeitskammer (20) und die zweite Fluidkammer (25) eine Ausgleichkammer (25) ist,
**dadurch gekennzeichnet, dass**
der Aktor (35) zwischen der ersten Fluidkammer (20) und der zweiten Fluidkammer (25) angeordnet ist,
der Aktor (35) zwischen der ersten Fluidkammer (20) und dem Umströmungsvolumen (26) angeordnet ist,
die Steuermembran (30) einen Schaft (36) aufweist, welcher durch den Aktor (35) translatorisch bewegt werden kann,
die Steuermembran (30) einen Flansch (37) aufweist, welcher mit dem Schaft (36) feststehend und mit dem Aktor (35) elastisch verbunden

2. Aktives Hydrolager (1) gemäß Anspruch 1,
wobei die erste Fluidkammer (20) und/oder die zweite Fluidkammer (25) im Wesentlichen parallel zum Umströmungsvolumen (26) angeordnet ist/sind.

3. Aktives Hydrolager (1) gemäß Anspruch 1 oder 2, ferner mit einem Umströmungskanal (29), welcher ausgebildet ist, das Umströmungsvolumen (26) und die erste Fluidkammer (20) fluidströmend miteinander zu verbinden.

4. Aktives Hydrolager (1) gemäß Anspruch 3,
wobei der Drosselkanal (22) und der Umströmungskanal (29) im Wesentlichen parallel zueinander angeordnet sind.

5. Aktives Hydrolager (1) gemäß Anspruch 4,
wobei der Drosselkanal (22) und/oder der Umströmungskanal (29) im Wesentlichen mäanderförmig ausgebildet ist/sind.

6. Aktives Hydrolager (1) gemäß einem der vorherigen Ansprüche,
wobei der Drosselkanal (22) und/oder der Umströmungskanal (29) im Wesentlichen senkrecht zur ersten Fluidkammer (20) und/oder zur zweiten Fluidkammer (25) und/oder zum Umströmungsvolumen (26) angeordnet ist/sind.

7. Aktives Hydrolager (1) gemäß einem der vorherigen Ansprüche,
wobei die Steuermembran (30) mit einer Seite an das Umströmungsvolumen (26) und mit der gegenüberliegenden Seite an eine Luftkammer (33) angrenzt.

8. Aktives Hydrolager (1) gemäß Anspruch 7,
wobei die Luftkammer (33) zumindest im Wesentlichen, vorzugsweise vollständig, innerhalb des Einbauraums des Aktors (35), vorzugsweise zwischen dem Drosselkanal (22), dem Umströmungskanal (29), der ersten Fluidkammer (20) und dem Umströmungsvolumen (26), angeordnet ist.

9. Motor, mit
einem aktiven Hydrolager (1), insbesondere mit einem invertierten aktiven Hydrolager (1), gemäß einem der vorherigen Ansprüche.

10. Kraftfahrzeug, mit
einem Motor gemäß des Anspruchs 9.

## Claims

1. Active hydraulic mount (1), in particular inverted active hydraulic mount (1), having
a first fluid chamber (20),
a second fluid chamber (25),
a throttle channel (22), which is configured to connect the first fluid chamber (20) and the second fluid chamber (25) to one another in terms of fluid flow,
a bypass volume (26), which is configured to be connected in terms of fluid flow to the first fluid chamber (20), and
an actuator (35) with a control diaphragm (30),
wherein the actuator (35) is configured to be able to move the control diaphragm (30), in particular in a translational manner, relative to the bypass volume (26), the first fluid chamber (20) is a working chamber (20) and the second fluid chamber (25) is a compensation chamber (25), **characterized in that**
the actuator (35) is arranged between the first fluid chamber (20) and the second fluid chamber (25),
the actuator (35) is arranged between the first fluid chamber (20) and the bypass volume (26),
the control diaphragm (30) has a shaft (36) which can be moved in a translational manner by the actuator (35),
the control diaphragm (30) has a flange (37) which is connected fixedly to the shaft (36) and elastically to the actuator (35).

2. Active hydraulic mount (1) according to Claim 1,
wherein the first fluid chamber (20) and/or the second fluid chamber (25) are/is arranged substantially parallel to the bypass volume (26).

3. Active hydraulic mount (1) according to Claim 1 or 2, furthermore having a bypass channel (29), which is configured to connect the bypass volume (26) and the first fluid chamber (20) to one another in terms of fluid flow.

4. Active hydraulic mount (1) according to Claim 3,
wherein the throttle channel (22) and the bypass channel (29) are arranged substantially parallel to one another.

5. Active hydraulic mount (1) according to Claim 4,
wherein the throttle channel (22) and/or the bypass channel (29) are/is of substantially meandering form.

6. Active hydraulic mount (1) according to one of the preceding claims,
wherein the throttle channel (22) and/or the bypass channel (29) are/is arranged substantially perpendicularly to the first fluid chamber (20) and/or to the second fluid chamber (25) and/or to the bypass volume (26).

7. Active hydraulic mount (1) according to one of the preceding claims,
wherein the control diaphragm (30) is at one side adjacent to the bypass volume (26) and at the opposite side adjacent to an air chamber (33).

8. Active hydraulic mount (1) according to Claim 7,
wherein the air chamber (33) is arranged at least substantially, preferably completely, within the installation space of the actuator (35), preferably between the throttle channel (22), the bypass channel (29), the first fluid chamber (20) and the bypass volume (26).

9. Engine having
an active hydraulic mount (1), in particular having an inverted active hydraulic mount (1), according to one of the preceding claims.

10. Motor vehicle having
an engine according to Claim 9.

## Revendications

1. Palier hydraulique actif (1), notamment palier hydraulique actif inversé (1), avec
une première chambre de fluide (20),
une deuxième chambre de fluide (25),
un canal d'étranglement (22) réalisé pour relier fluidiquement entre elles la première chambre de fluide (20) et la deuxième chambre de fluide (25),
un volume de circulation (26) réalisé pour être relié fluidiquement à la première chambre de fluide (20), et
un actionneur (35) avec une membrane de commande (30),
l'actionneur (35) étant réalisé pour pouvoir déplacer la membrane de commande (30) par rapport au volume d'écoulement (26), notamment en translation, la première chambre de fluide (20) étant une chambre de travail (20) et la deuxième chambre à fluide (25) étant une chambre de compensation (25), **caractérisé en ce que**
l'actionneur (35) est agencé entre la première chambre de fluide (20) et la deuxième chambre de fluide (25),
l'actionneur (35) est agencé entre la première chambre de fluide (20) et le volume de circulation (26),
la membrane de commande (30) présente une tige (36) qui peut être déplacée en translation par l'actionneur (35),
la membrane de commande (30) présente une bride (37) qui est reliée de manière fixe à la tige (36) et de manière élastique à l'actionneur (35).

2. Palier hydraulique actif (1) selon la revendication 1,
dans lequel la première chambre de fluide (20) et/ou la deuxième chambre de fluide (25) est/sont agencées essentiellement parallèlement au volume d'écoulement (26).

3. Palier hydraulique actif (1) selon la revendication 1 ou 2, avec en outre un canal de circulation (29) qui est réalisé pour relier fluidiquement entre eux le volume de circulation (26) et la première chambre de fluide (20).

4. Palier hydraulique actif (1) selon la revendication 3,
dans lequel le canal d'étranglement (22) et le canal de circulation (29) sont agencés essentiellement parallèlement l'un à l'autre.

5. Palier hydraulique actif (1) selon la revendication 4,
dans lequel le canal d'étranglement (22) et/ou le canal de circulation (29) est/sont réalisés essentiellement en forme de méandres.

6. Palier hydraulique actif (1) selon l'une quelconque des revendications précédentes,
dans lequel le canal d'étranglement (22) et/ou le canal de circulation (29) est/sont agencés essentiellement perpendiculairement à la première chambre de fluide (20) et/ou à la deuxième chambre de fluide (25) et/ou au volume de circulation (26).

7. Palier hydraulique actif (1) selon l'une quelconque des revendications précédentes,
dans lequel la membrane de commande (30) est adjacente par un côté au volume de circulation (26) et par le côté opposé à une chambre à air (33).

8. Palier hydraulique actif (1) selon la revendication 7,
dans lequel la chambre à air (33) est au moins essentiellement, de préférence entièrement, agencée à l'intérieur de l'espace de montage de l'actionneur (35), de préférence entre le canal d'étranglement (22), le canal de circulation (29), la première chambre de fluide (20) et le volume de circulation (26).

9. Moteur, avec
un palier hydraulique actif (1), notamment avec un palier hydraulique actif inversé (1), selon l'une quelconque des revendications précédentes.

10. Véhicule automobile, avec
un moteur selon la revendication 9.
